# EUROPEAN PATENT SPECIFICATION

(11) **EP 0 785 116 B1**
(45) Date of publication and mention of the grant of the patent: **11.04.2001**
(21) Application number: 97300224.9
(22) Date of filing: 15.01.1997
(51) Int. Cl.: B60S 1/34

(54) **Improvements relating to wiper arm assemblies**
Scheibenwischerarm
Bras d'essuie-glace

(30) Priority: 20.01.1996 GB 9601191
(43) Date of publication of application: 23.07.1997
(73) Proprietor: TRICO PRODUCTS CORPORATION, Buffalo, NY 14203 (US)
(72) Inventor: Robertson, Alistair Duncan, Aberdare, Mid Glamorgan, CF44 6RP (GB); Dancer, Nigel Paul, Abergavenny, Gwent, NP7 6LZ (GB); Clarke, Byron, Aberdare, Mid Glamorgan, CF44 7BD (GB)
(74) Representative: James, Michael John Gwynne

(56) References cited:
- DE-A- 3 639 537
- FR-A- 2 162 899
- FR-A- 2 183 334
- FR-A- 2 534 206
- GB-A- 2 069 325

## Description

A wiper arm assembly forms a linkage between the drive motor and the wiper blade of a windscreen wiper and conventionally comprises two parts, namely a retainer and an armpiece. In the final construction of such a wiper arm assembly it is required that the end of the armpiece should be securely held within the retainer. The tip of the armpiece often provides a mounting for a compression spring which holds the wiper arm down onto the windscreen. Consequently there is a force (provided by the spring) tending to pull the armpiece further into the retainer. Secure fixing of the armpiece is therefore very important.

A wiper arm assembly as illustrated in GB-A-2069325 comprises an armpiece and a retainer, the retainer having side portions which are swaged over one end of the armpiece, said one end of the armpiece having grip configurations in the form of cut away portions or projections, into or about which the parts of the swaged side portions have been crimped during the swaging procedure.

According to the present invention the swaging comprises external deformation of these side portions so that the inner faces of the deformed sections of the side portions flow into or about said grip configurations to hold the armpiece firmly within the retainer.

The moulding of the material of the side portions of the retainer into or about the grip configurations provides a secure interconnection of the armpiece with the retainer.

In one form of construction the grip configurations can comprise one or more notches cut into both side edges of the end part of the armpiece, into which crimped parts of the retainer have been impressed. The grip configurations could comprise a single elongated notch on either side of the end portion of the armpiece. A preferred arrangement has at least two notches in each side edge of the retainer, which notches are staggered with respect to one another from the one side to the other. This provides a better gripping effect and reduces the extent to which the body of the armpiece is weakened.

The invention may be performed in various ways and some preferred embodiments will now be described, by way of example, with reference to the accompanying drawings, in which:-
Figures 1A and B are perspective views of the end of an armpiece of an assembled wiper arm assembly for one form of the invention; and
Figures 2A and B are corresponding views for a second embodiment of the invention.

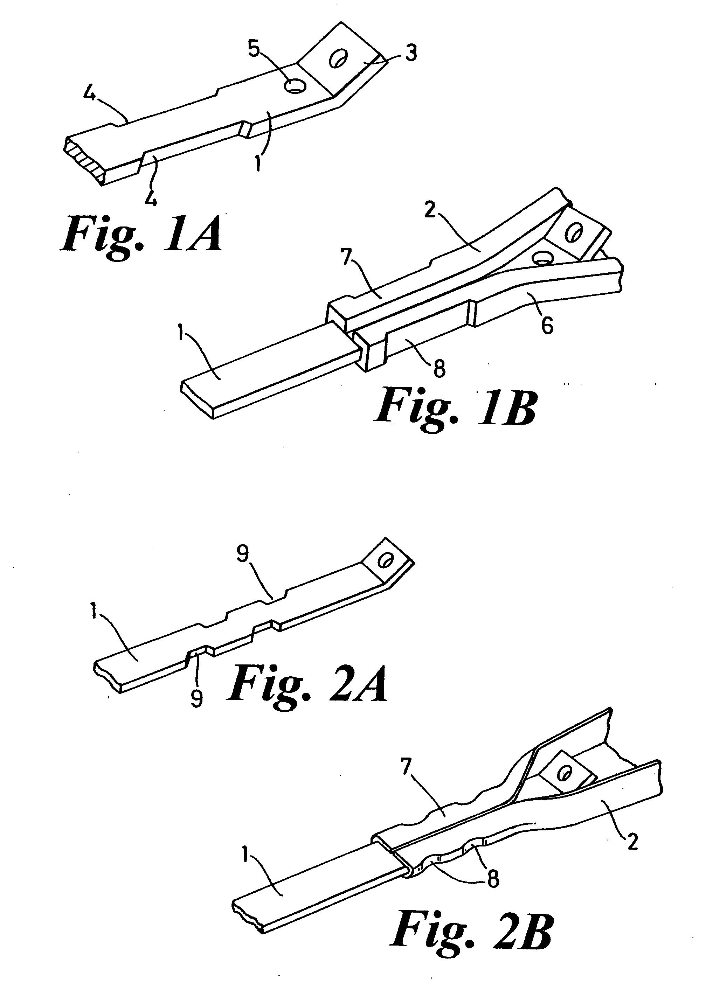

In the arrangement shown in Figure 1 the end of an armpiece 1 is fitted into the end of a retainer 2. The armpiece 1 has an upturned end 3 to provide a mounting for a retaining spring. The sides of the armpiece 1 are cut away to provide two elongated notches 4. The precise location of these notches is ensured by providing a pilot hole 5 for location of the arm 1 during the cutting of the notches. When the armpiece 1 has been placed in the desired location within the retainer 2 the side portions 6 are swaged down at 7 over the armpiece 1 and at the same time crimping of the material of the retainer 2 at 8 into the recesses 4 provides a secure location of the armpiece within the retainer 2.

In the wiper arm assembly shown in Figure 2 a pair of notches 9 are formed in each side of the armpiece 1. Again the side portions 7 of the retainer are swaged over and crimped inwardly to locate part of the material of the retainer at 8 in the notches 9. The staggered location of the notches 9 reduces the extent of weakening of the armpiece 1.

## Claims

1. A wiper arm assembly comprising an armpiece (1) and a retainer (2), the retainer having side portions (7) which are swaged over one end of the armpiece, said one end of the armpiece having grip configurations in the form of cut away portions (4,9) or projections, into or about which the parts of the swaged side portions have been crimped during the swaging procedure characterised in that the swaging comprises external deformation of these side portions so that the inner faces of the deformed section of the side portions flow into or about said grip configurations to hold the armpiece firmly within the retainer.

2. A wiper arm assembly according to Claim 1, wherein the grip configurations comprise one or more notches (4,9) cut into both side edges of the end part of the armpiece, into which crimped parts of the retainer have been impressed.

3. A wiper arm assembly according to Claim 2, wherein there are at least two notches (9) in each side edge of the retainer, which notches are staggered with respect to one another from the one side to the other.

## Revendications

1. Ensemble de bras d'essuie-glace comprenant une pièce formant bras (1) et un organe de fixation (2), l'organe de fixation (2) ayant des portions latérales (7) qui sont estampées par-dessus l'une des extrémités de la pièce formant bras, ladite extrémité précitée de la pièce formant bras ayant des configurations de saisie se présentant sous la forme de parties coupées (4, 9) ou de projections, dans ou autour desquelles les parties des portions latérales estampées ont été rabattues pendant le processus d'estampage, caractérisé par le fait que l'estampage comprend une déformation externe de ces portions latérales de telle sorte que les faces internes de la section déformée des portions latérales s'écoulent dans ou autour desdites configurations de saisie pour maintenir la pièce formant bras de façon ferme à l'intérieur de l'organe de fixation.

2. Ensemble de bras d'essuie-glace selon la revendication 1, dans lequel les configurations de saisie comprennent une ou plusieurs encoches (4, 9) coupées dans les deux bordures latérales de la partie d'extrémité de la pièce formant bras, dans lesquelles des parties rabattues de l'organe de fixation ont été imprimées.

3. Ensemble de bras d'essuie-glace selon la revendication 2, dans lequel il y a au moins deux encoches (9) dans chaque bordure latérale de l'organe de fixation, lesquelles encoches sont décalées l'une par rapport à l'autre d'un côté à l'autre.

## Patentansprüche

1. Wischerarmanordnung mit einem Armteil (1) und einem Halter (2), wobei der Halter Seitenabschnitte (7) aufweist, die um ein Ende des Armteils gesenkgeschmiedet ausgebildet sind, wobei dieses Ende des Armteils mit Klemmitteln in Form von Ausnehmungen (4, 9) oder Erhebungen ausgebildet ist, in oder um die entsprechende Teile der gesenkgeschmiedeten Seitenabschnitte Gesenkgeschmiedet sind,
**dadurch gekennzeichnet, daß**
das Gesenkschmieden eine externe Deformation der Seitenabschnitte derart umfaßt, daß zum festen Haltern des Armteils innerhalb des Halters innere Flächen der deformierten Abschnitte der Seitenabschnitte in die oder um die Klemmittel fließen.

2. Wischerarmanordnung gemäß Anspruch 1, dadurch gekennzeichnet, daß die Klemmittel einen oder mehrere Kerben (4, 9) umfassen, die beidseitig in Kanten des Endteils des Armteils geschnitten sind, wobei gepreßte Teile des Halters in diese Kerben hinein gerückt sind.

3. Wischerarmanordnung gemäß Anspruch 2, dadurch gekennzeichnet, daß wenigstens zwei Kerben (4, 9) an jeder Seitenkante des Halters vorgesehen sind, wobei an den Kanten gegenüberliegende Kerben gegeneinander versetzt angeordnet sind.
